# EUROPÄISCHE PATENTANMELDUNG

(11) **EP 4 331 367 A1**
(43) Veröffentlichungstag der Anmeldung: **06.03.2024**
(21) Anmeldenummer: 23194641.9
(22) Anmeldetag: 31.08.2023
(51) Int. Cl.: A21C 3/02

(54) **VORRICHTUNG ZUR ERZEUGUNG EINES KONTINUIERLICHEN TEIGBANDES UND VON TEIGPORTIONEN IN FORM VON ABSCHNITTEN DES TEIGBANDES**

(30) Priorität: 02.09.2022 DE 102022209174
(71) Anmelder: Werner & Pfleiderer Industrielle Backtechnik GmbH, 71732 Tamm (DE)
(72) Erfinder: Fiedler, Rudolf, 91731 Langfurth (DE); Kriegbaum, Stefan, 74321 Bietigheim-Bissingen (DE); Wagner, Matthias, 70839 Gerlingen (DE); Storm, Sören, 71229 Leonberg/Waldbronn (DE)
(74) Vertreter: Rau, Schneck & Hübner Patentanwälte Rechtsanwälte PartGmbB

(57) **Zusammenfassung**

Eine Vorrichtung (1) dient zur Erzeugung eines kontinuierlichen Teigbandes und von Teigportionen in Form von Abschnitten des Teigbandes. Die Vorrichtung hat einen Teigbehälter (4) zur Aufnahme einer Teigmasse. In einem Walzengehäuse ist ein Paar (6) von beabstandeten, gegenläufig orientierten Teig-Förderwalzen (7, 8) angeordnet. Das Walzengehäuse ist in einem Förderweg der Teigmasse den Teigbehälter (4) nachgeordnet. Jede der Förderwalzen (7, 8) des Förderwalzen-Paars (6) hat eine Walzen-Mantelwand (11, 12). Diese hat jeweils eine Mehrzahl von um eine Walzenachse (9, 10) umlaufende, axial voneinander durch Fördernuten (19ᵢ, 20ᵢ) beabstandete Förderrippen (17₁ bis 17₆, 18₁ bis 18₅). Eine Teig-Auslassdüse der Vorrichtung (1) ist im Förderweg der Teigmasse in Form eines Teigstrangs dem Walzengehäuse nachgeordnet. Es resultiert eine Vorrichtung, mit der eine schonende Teigbanderzeugung gewährleistet ist.

## Beschreibung

Die Erfindung betrifft eine Vorrichtung zur Erzeugung eines kontinuierlichen Teigbandes und von Teigportionen in Form von Abschnitten des Teigbandes.

Eine Vorrichtung zur Erzeugung eines kontinuierlichen Teigbandes ist bekannt aus der EP 1 905 306 A2.

Es ist eine Aufgabe der vorliegenden Erfindung, eine Vorrichtung der eingangsgenannten Art derart weiterzubilden, dass eine schonende Teigbanderzeugung gewährleistet ist.

Diese Aufgabe ist erfindungsgemäß gelöst, durch eine Vorrichtung mit den im Anspruch 1 angegebenen Merkmalen.

Erfindungsgemäß wurde erkannt, dass eine Rippenprofilierung der Walzen-Mantelwände der Förderwalzen des mindestens einen Förderwalzen-Paares eine schlupffreie Anhaftung des Teiges beim Fördern zwischen den beiden Teig-Förderwalzen hindurch begünstigt. Ein unerwünschter Schlupf beziehungsweise eine unerwünschte Teigscherung beim Fördern zwischen den Förderwalzen hindurch kann dann vermieden werden. Es sind dann Ausführungen möglich, mit denen ein höherer Teigdurchsatz geschaffen werden kann. Eine gegebene Adhäsion zwischen dem Teig und der jeweiligen Walzen-Mantelwand kann mit Hilfe von Förderwalzen mit vorteilhaft kleinem Walzendurchmesser erreicht werden. Ein Durchmesser der Teig-Förderwalzen kann im Bereich zwischen 200 mm und 800 mm liegen. Dieser Durchmesser kann abhängig von Art und Konsistenz des zu verarbeitenden Teigs gewählt werden. Je nach Teigart- und Konsistenz kann der Durchmesser auch außerhalb des erwähnten Bereichs liegen.

Eine Oberfläche der jeweiligen Förderwalze kann aufgrund der Förderrippen 1,5-mal bis 2-mal so groß sein wie eine Oberfläche einer Förderwalze ohne Förderrippen.

Ein Förderabstand zwischen den benachbarten Förderwalzen kann, gemessen senkrecht zu den Walzenachsen, im Bereich zwischen 20 mm und 25 mm liegen. Auch ein kleinerer Förderabstand ist je nach dem geförderten Teig und dem gewünschten Förderergebnis möglich.

Die Förderrippen können einen sinusförmigen Rippenquerschnitt aufweisen.

Teigberührende Komponenten der Vorrichtung, insbesondere die Mantelwände der Förderwalzen, sind aus einem lebensmittelzugelassenen Werkstoff. Hierbei kann es sich um Metalle, Kunststoffe oder Verbundwerkstoffe handeln. Zudem kann die Oberflächenbeschaffenheit der Walzen, je nach Adhäsionsgrad des zu fördernden Gutes, deren Förder- beziehungsweise Schleppverhalten beeinflussen. Ähnliche Effekte können durch Walzenbeschichtungen der Förderwalzen erreicht werden.

Grundsätzlich kann mit einer Vorrichtung, aufweisend mindestens ein Förderwalzen-Paar, mit den in dieser Anmeldung beschriebenen Merkmalen Gebäckteig oder auch ein anderer Teig beziehungsweise Werkstoff bearbeitet werden, beispielsweise Brät, insbesondere Wurstbrät oder Hackfleisch. Auch ein zubereitetes Brät, beispielsweise ein Bratwurstgehäck, kann ein derartiger Werkstoff sein. Auch andere zähfließende Werkstoffe können mit entsprechenden Ausführungen der Vorrichtung bearbeitet werdern.

Förderrippen, die nach Anspruch 2 äquidistant zueinander angeordnet sind, lassen sich kostengünstig herstellen und ermöglichen eine komplementäre Relativanordnung der Förderwalzen des Förderwalzen-Paars.

Eine Förderwalzen-Ausrichtung nach Anspruch 3 ermöglicht die Bereitstellung eines insbesondere konstanten Abstandes zwischen den Walzen-Mantelwänden im Bereich eines Förderspaltes zwischen den Förderwalzen des Förderwalzen-Paars. Eine Variation des Abstandes zwischen den Walzen-Mantelwänden über die gesamte genutzte Axialerstreckung der Förderwalzen des Förderwalzen-Paares kann kleiner sein als 20 %, kann kleiner sein als 15 %, kann kleiner sein als 10 % und kann auch noch kleiner sein. Der Abstand kann senkrecht zu den Drehachsen der Förderwalzen gemessen werden.

Eine stetige, kantenfreie Profilierung nach Anspruch 4 führt zu einer schonenden Teigbehandlung bei der Förderung durch die Vorrichtung. Unerwünschte Scher- und/oder Schneideffekte können vermieden werden.

Eine stetige und kantenfreie Profilierung nach Anspruch 5 kann als Sinusprofilierung gestaltet sein.

Eine Strukturierung nach Anspruch 6 führt zu einer reibungserhöhenden Wirkung. Je nach Ausführung der Förderwalzen kann auf eine solche Strukturierung auch verzichtet werden, sodass insbesondere Schereffekte erwünscht klein bleiben.

Eine Verschlusseinrichtung nach Anspruch 7 ermöglicht insbesondere eine schonende Portionierung der Teigband-Abschnitte. Die Verschlusseinrichtung kann so arbeiten, dass beim Übergang von der Freigabestellung in die Verschlussstellung die jeweilige Teigband-Portion abgedrückt und nicht geschnitten wird, was zur schonenden Behandlung des Teiges beiträgt.

Ein schneller Austausch von Komponenten der Vorrichtung, also der Förderwalzen und/oder der Teig-Auslassdüse, nach Anspruch 8 ermöglicht beispielsweise eine schnelle Wartung oder Reparatur. Zudem können die Komponenten an Teigparameter beziehungsweise sonstige Bearbeitungsvorgaben angepasst werden. Schnell ist der Austausch der jeweiligen Komponente insbesondere dann, wenn er während einer ohnehin notwendigen Betriebspause der Vorrichtung, beispielsweise innerhalb von weniger als 30 Minuten, erfolgen kann. Insbesondere ein werkzeugloser Austausch kann je nach Ausführung der Vorrichtung vorgesehen sein.

Ein Set nach Anspruch 9, bei dem es sich beispielsweise um ein Set aus unterschiedlichen Förderwalzen-Paaren und/oder um ein Set aus unterschiedlichen Teig-Auslassdüsen handeln kann, ermöglicht eine Anpassung der Vorrichtung an unterschiedliche Teigparameter und/oder an unterschiedliche Bearbeitungsvorgaben.

Eine Volumen-Messeinrichtung nach Anspruch 10 erlaubt eine präzise Vorgabe der jeweiligen Teigportion und/oder eine Überprüfung der Teigqualität. Die Teigportionen können mit hoher Präzision vorgegeben werden, sodass eine unnötige Überportionierung erspart werden kann. Das Volumen-Messergebnis kann dann als Feedback an die Vorrichtung weitergegeben werden, was eine Betriebssicherheit erhöht und insbesondere eine Genauigkeit folgender Portionierschritte verbessern hilft. Ein geregelter Betrieb der Vorrichtung ist hierbei möglich. Die Volumen-Messeinrichtung kann entsprechend einer Ausführung gestaltet sein, die beschrieben ist in der EP 2 305 039 B1. Bei der Volumen-Messeinrichtung kann es sich insbesondere um eine optische Messeinrichtung handeln.

Mit Hilfe einer Waage nach Anspruch 11 kann ein Gewicht eines definierten Abschnitts des Teigbandes und/oder der jeweils erzeugten Teigportion bestimmt werden. Das Wiegeergebnis kann dann als Feedback an die Vorrichtung weitergegebenen werden, was eine Genauigkeit folgender Portionierschritte verbessern hilft. Auf diese Weise kann ein geregelter Betrieb der Vorrichtung erfolgen.

Eine Steuereinrichtung nach Anspruch 12 ermöglicht einen automatisierten Portionierprozess. Mit Hilfe von Eingabe- oder Messdaten kann der Portionierprozess insbesondere abhängig von einem Reifegrad des Teiges oder auch von einem Reifegrad von verschiedenen Portionen der Teigmasse erfolgen. Die Steuereinrichtung kann künstliche Intelligenz (KI)-Komponenten beinhalten. Die Steuereinrichtung kann einen rein gesteuerten oder einen geregelten Betrieb der Vorrichtung ermöglichen.

Mit Hilfe einer Steuereinrichtung nach Anspruch 13 kann ein signalabhängiger Portionierprozess, also ein Portionierprozess abhängig von Messergebnissen der Volumen-Messeinrichtung und/oder der Waage erfolgen. Eine genaue Portionierung auch bei unterschiedlichen Teigsorten, Teigkonsistenzen und Teig-Reifegraden ist möglich.

Eine CIP-Ausführung der Vorrichtung nach Anspruch 14 kann strengen Lebensmittel-Anforderungen an die Vorrichtung genügen.

Insbesondere die Abhängigkeit eines spezifischen Teiggewichtes vom Reifegrad kann hierbei genutzt werden.

Ein Ausführungsbeispiel der Erfindung wird nachfolgend anhand der Zeichnung näher erläutert. In dieser zeigen:
- Fig. 1: eine schematische Schnittdarstellung einer Vorrichtung zur Erzeugung eines kontinuierlichen Teigbandes und von Teigportionen in Form von Teigband-Abschnitten, wobei lediglich für die Funktionsbeschreibung wesentliche Komponenten der Vorrichtung dargestellt sind, gemäß Schnittlinie I-I in Fig. 2;
- Fig. 2: eine Aufsicht auf die Vorrichtung gemäß Blickrichtung II in Figur 1;
- Fig. 3: in einer zu Figur 1 ähnlichen Darstellung die Vorrichtung in einem Prozessschritt "Teigband-Auslass und Teigband-Vermessung";
- Fig. 4: wiederum in einer zu Fig. 1 ähnlichen Darstellung die Vorrichtung während eines weiteren Teigband-Auslasses, wobei das Teigband kontinuierlich vermessen wird; und
- Fig. 5: wiederum in einer zu Fig. 1 ähnlichen Darstellung die Vorrichtung nach einem Abdrücken einer Teigportion in Form eines Teigband-Abschnitts durch Schließen einer Verschlusseinrichtung der Vorrichtung in eine Verschlussstellung, in der ein Auslassabschnitt einer Teig-Auslassdüse der Vorrichtung verschlossen ist.

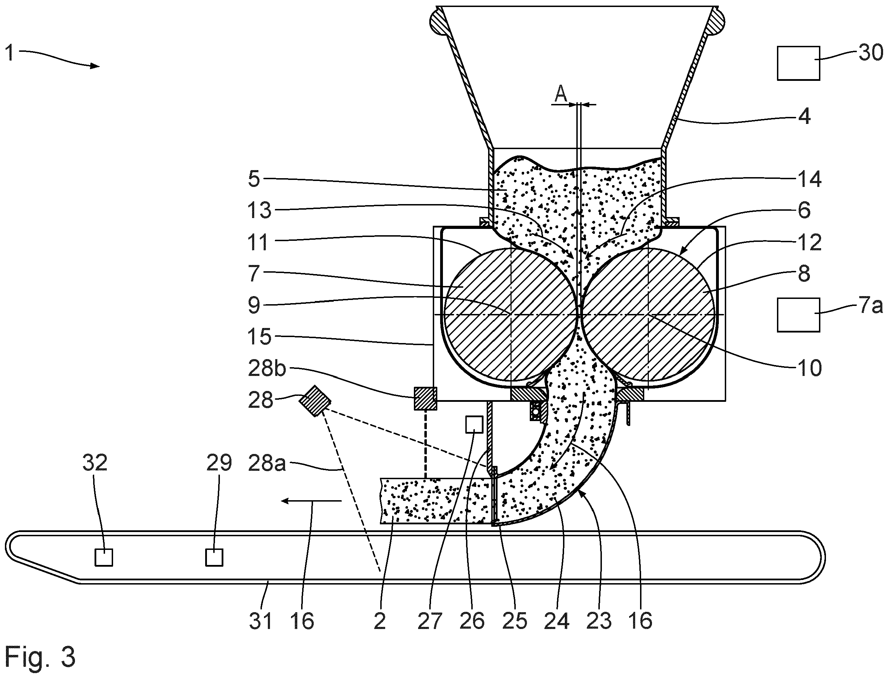

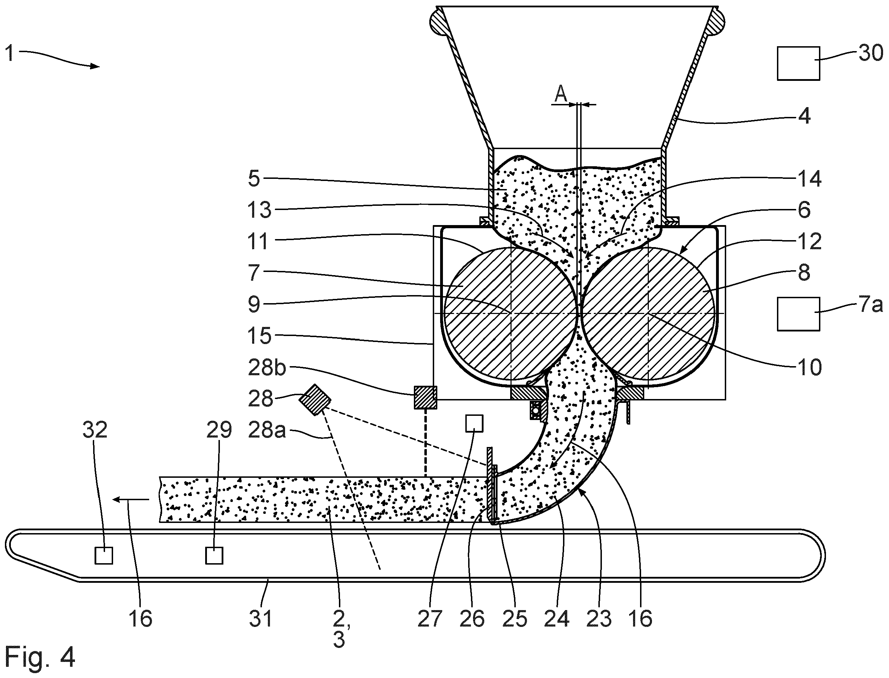

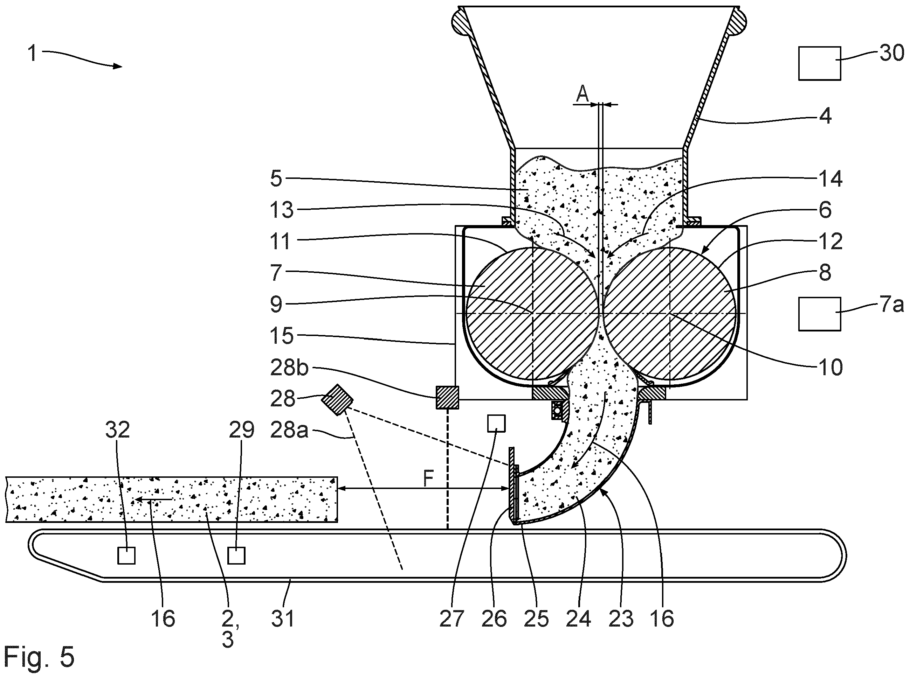

Eine Vorrichtung 1 dient zur Erzeugung eines kontinuierlichen Teigbandes 2 (vgl. Fig. 3 und 4) und zur Erzeugung von Teigportionen 3 (vgl. Fig. 5) in Form von Abschnitten des Teigbandes 2. Die Teigbandportionen können in einem Gewichtsbereich zwischen beispielsweise 100 g und 100 kg erzeugt werden. Typische Teigbandportionen haben ein Gewicht von 200 g, von 1 kg, von 5 kg, von 20 kg, von 40 kg oder im dazwischenliegenden Bereich. Endlose Teigstränge ohne Teilung können von Produktionsbeginn bis Produktionsende aufgearbeitet werden.

Die Vorrichtung 1 hat einen abschnittsweise trichterförmigen Teigbehälter 4 zur Aufnahme einer Teigmasse 5. Die Teigmasse 5 kann Resultat einer kontinuierlichen Teigherstellung sein. Alternativ oder zusätzlich kann die Teigmasse 5 Resultat einer batchweisen Teigherstellung sein und kann Teigportionen unterschiedlicher Reifegrade aufweisen, insbesondere mit zeitlichem Abstand produzierte Knetportionen. Zustandsparameter dieser Teigportionen unterschiedlicher Reifegrade können durch kontinuierliches Dichtemessen oder Batcherkennung zur Optimierung der Teigstrangförderung erfasst werden und in die Steuerung der Vorrichtung 1 einfließen.

Bei dem Teig der Teigmasse 5 kann es sich um einen Gebäckteig oder auch um einen anderen Lebensmittelteig, beispielsweise um einen Fleischteig wie zum Beispiel ein Brät handeln. Auch ein anderer Werkstoff ist möglich.

Die Vorrichtung 1 hat weiterhin ein Paar 6 aus zwei Teig-Förderwalzen 7, 8. Die beiden Teig-Förderwalzen 7, 8 haben horizontal verlaufende Walzenachsen 9, 10, die auch als Walzen-Rotationsachsen bezeichnet werden, in der dargestellten Ausführung auf gleicher Höhe liegen und parallel zueinander sind. Die Förderwalzen 7, 8 haben senkrecht zu den Walzenachsen 9, 10 über einen vorgegebenen Bearbeitungs-Axialbereich einen gleichen Förderabstand zueinander. Walzenabstände, welche von parallelen Abständen abweichen, oder konvexe, konkave oder anderweitige Abstände sind ebenso möglich.

Walzen-Mantelwände 11, 12 der Förderwalzen 7, 8 sind voneinander beabstandet, sodass auch die beiden Teig-Förderwalzen 7, 8 insgesamt voneinander horizontal beabstandet sind. Ein Absolutwert eines lichten Abstands (Förderabstands) A zwischen den benachbarten Walzen-Mantelwänden 11, 12 liegt im Bereich zwischen 2 mm und 40 mm. Der Abstand A spezifiziert eine minimale Weite eines Förderspaltes zwischen den Förderwalzen 7, 8 des Paares 6 längs des Förderwegs 16.

Für die Aufarbeitung von Teigen sind die angegebenen Walzenabstände ideal. Werden anstelle von Teig für Gebäck Fleischbrät oder Tierfutter gefördert, können auch größere Abstände A zum Einsatz kommen. Beim Fördern größerer Walzenspalte beziehungsweise Förderspalte reduziert sich der Staudruck zwischen Walzen und Auslassdüse, was zu geringerer und wechselhafterer Ausformleistung führen kann.

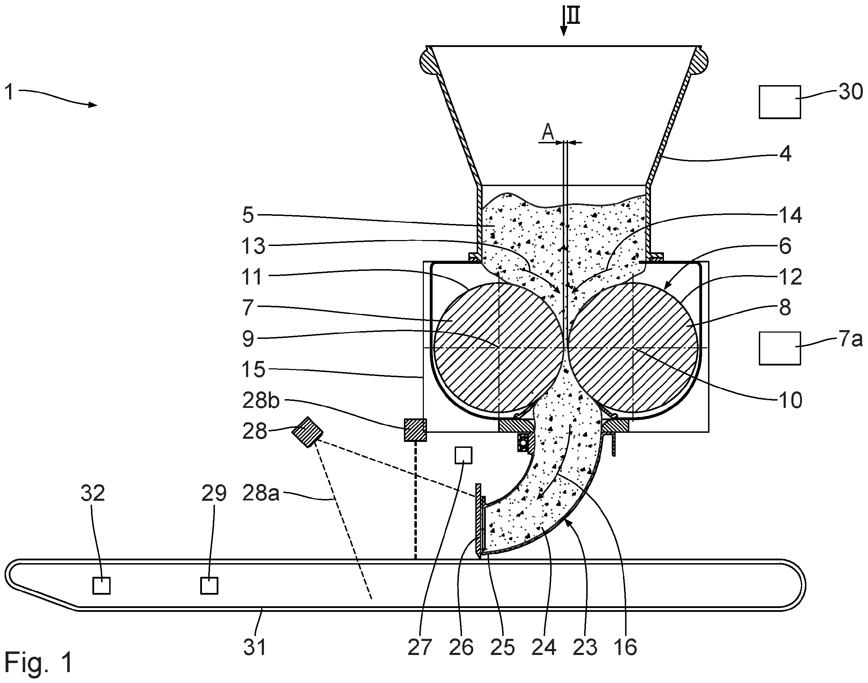

Die beiden Teig-Förderwalzen 7, 8 sind gegenläufig orientiert, rotieren also beim Betrieb der Vorrichtung 1 in gegenläufigem Drehsinn, wie in der Fig. 1 durch Pfeile 13, 14 verdeutlicht. Die beiden Förderwalzen 7, 8 werden über einen in der Fig. 1 schematisch dargestellten Förderabtrieb 7a angetrieben.

Die beiden Teig-Förderwalzen 7, 8 des Paares 6 sind in einem Walzengehäuse 15 angeordnet. Das Walzengehäuse 15 ist in einem Förderweg 16 der Teigmasse 5 dem Teigbehälter 4 nachgeordnet.

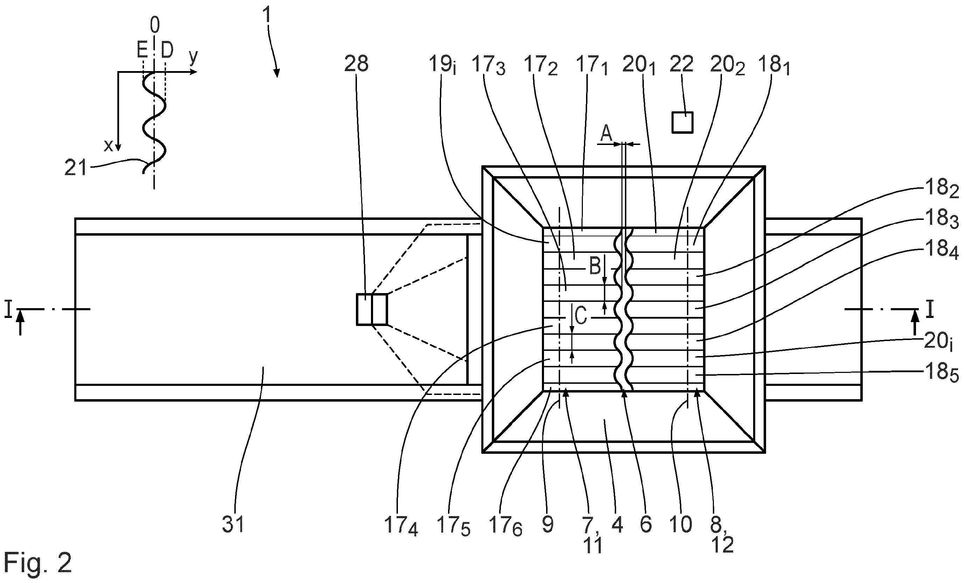

Die Aufsicht nach Fig. 2 offenbart Details einer Profilgestaltung der Walzen-Mantelwände 11, 12 der Teig-Förderwalzen 7, 8. Jede dieser Walzen-Mantelwände 11, 12 hat eine Mehrzahl von Förderrippen 17; (i=1,...6), 18; (i=1,...5), die um die jeweilige Walzenachse 9, 10 der Teig-Förderwalze 7, 8 umlaufen. Die jeweils benachbarten Förderrippen 17ᵢ, 17ᵢ₊₁ beziehungsweise 18ᵢ, 18ᵢ₊₁ sind voneinander in axialer Richtung der Walzenachse 9, 10 durch Fördernuten 19; (i=1,...5), 20ᵢ (i=1,...6) der Teig-Förderwalzen 7, 8 voneinander beabstandet.

Die Förderrippen 17ᵢ haben längs der Walzenachse 9 jeweils die gleiche Axialerstreckung.

Die Förderrippen 18ᵢ haben längs der Walzenachse 10 jeweils die gleiche Axialerstreckung.

Zwischen den axialbenachbarten Förderrippen 17ᵢ, 17i+i liegen gleiche Axialabstände vor. Die Fördernuten 19ᵢ haben also jeweils die gleiche Axialerstreckung längs der Walzenachse 9.

Zwischen den axialbenachbarten Förderrippen 18ᵢ, 18i+i liegen gleiche Axialabstände vor. Die Fördernuten 20ᵢ haben also jeweils die gleiche Axialerstreckung längs der Walzenachse 10.

Eine Axialerstreckung einer der Förderrippen 17ᵢ, 18ᵢ ist in der Fig. 2 beispielhaft mit B bezeichnet. Eine Axialerstreckung der Fördernuten 19ᵢ, 20ᵢ, die auch als Rotations-Axialabstand bezeichnet wird, ist in der Figur 2 beispielhaft mit C bezeichnet. Bei der dargestellten Ausführung gilt: B=C. Ein Aspektverhältnis B/C kann im Bereich zwischen 0,2 und 5 liegen.

Die Walzen-Mantelwände 11, 12 der Förderwalzen 7, 8 des Paars 6 sind so zueinander ausgerichtet, dass eine Förderrippe 17ᵢ der einen Förderwalze 7 des Paars 6 axial auf Höhe einer Fördernut 19ᵢ der anderen Förderwalze 8 des Paars 6 liegt. Entsprechend liegt eine Fördernut 19ᵢ der einen Förderwalze 7 des Paars 6 axial auf Höhe einer Förderrippe 18ᵢ der anderen Förderwalze 8 des Paars 6.

Ein Diagramm-Insert der Figur 2 verdeutlicht ein Rippenprofil 21 der Walzen-Mantelwände 11, 12, also der Förderrippen 17ᵢ, 18ᵢ einerseits und der Fördernuten 19ᵢ, 20ᵢ andererseits. Das Rippenprofil 21 ist dargestellt als Profilhöhe y über eine Axialerstreckung x längs der Walzenachsen 9 beziehungsweise 10.

Das Rippenprofil 21 ist stetig und kantenfrei. Die Förderrippen 17; beziehungsweise 18; gehen stetig und kantenfrei in die jeweiligen Fördernuten 19i, 20ᵢ über. Bei der dargestellten Ausführung ist das Rippenprofil 21 ein Sinusprofil.

Das Rippenprofil 21 oszilliert um einen mittleren Durchmesser y=0 der Förderwalzen 7, 8. Die Axialerstreckungen B, C der Förderrippen 17ᵢ, 18ᵢ einerseits und der Fördernuten 19ᵢ, 20ᵢ andererseits werden zwischen den Nulldurchgängen des Rippenprofils 21 gemessen. Eine Rippenhöhe D sowie eine Nuttiefe E der Förderrippen 17ᵢ, 18ᵢ sowie der Fördernuten 19ᵢ, 20ᵢ sind in diesem Diagramm-Insert als jeweilige Abstände zu y=0 ebenfalls eingezeichnet. Bei der dargestellten Ausführung gilt: D=E. Ein Aspektverhältnis DIE kann je nach Ausführung der Förderwalzen 7, 8 im Bereich zwischen 0,5 und 2 liegen.

Die Förderrippen-Konfiguration der Teig-Förderwalzen 7, 8 führt zu einer Oberflächenvergrößerung der Walzen-Mantelwände 11, 12 im Vergleich zu konventionellen Förderwalzen ohne eine derartige Rippenprofilierung. Diese Oberflächenvergrößerung kann größer sein als 10 %, kann größer sein als 25 %, kann größer sein als 50 % und kann beispielsweise bei 100 % liegen oder noch größer sein. Die Oberfläche der jeweiligen Walzen-Mantelwand 11, 12 kann also doppelt so groß sein wie die Oberfläche der Mantelwand einer konventionellen Förderwalze ohne Rippenprofilierung.

Je nach zu förderndem Werkstoff, also abhängig insbesondere von einer Viskosität des zu fördernden Teigs, können auch gröber oder feiner gerillte beziehungsweise gerippte Formen der Förderwalzen 7, 8 zum Einsatz kommen.

Zusätzlich zur Rippen/Nutstrukturierung, also der Rippenprofilierung können die Walzen-Mantelwände 11, 12 der jeweiligen Förderwalze 7, 8 des Paars 6 eine Strukturierung aufweisen, was eine reibungserhöhende Wirkung zwischen den Walzen-Mantelwänden 11, 12 und der Teigmasse 5 zur Folge hat. Diese zusätzliche Strukturierung kann durch eine definierte Aufrauung der Walzen-Mantelwände 11, 12 realisiert sein.

Der Abstand A zwischen den Förderwalzen 7, 8 des Förderwalzen-Paars 6 kann mit Hilfe eines in der Figur 2 schematisch angedeuteten Abstands-Einstellantriebs 22 einstellbar vorgegeben werden.

Die Vorrichtung 1 hat weiterhin eine Teig-Auslassdüse 23, die im Förderweg 16 der Teigmasse 5, die dann die Form eines Teigstrangs 24 hat, im Walzengehäuse 15 nachgeordnet ist. Die Teig-Auslassdüse 23 sorgt für eine 90 °-Umlenkung des Förderwegs 16. Je nach Ausführung der Vorrichtung 1 kann die Teig-Auslassdüse 23 auch ohne Umlenkung oder mit einem anderen Umlenkwinkel als 90° ausgelegt sein.

Im Bereich eines Auslassabschnitts 25 der Teig-Auslassdüse 23 ist eine Verschlusseinrichtung 26 der Vorrichtung 1 angeordnet. Die Verschlusseinrichtung 26 ist als Schieber ausgeführt, der über einen Verschlussantrieb 27, der in der Fig. 1 schematisch dargestellt ist, angetrieben zwischen einer Verschlussstellung (vgl. Fig. 1) und einer Freigabestellung (vgl. Fig. 3) umstellbar ist. In der Verschlussstellung verschließt die Verschlusseinrichtung 26 den Auslassabschnitt 25 der Teig-Auslassdüse 23. In der Freigabestellung gibt die Verschlusseinrichtung 26 den Auslassabschnitt 25 zum Durchtritt des Teigstrangs 24, der die Teig-Auslassdüse 23 in Form des Teigbandes 2 verlässt, frei.

Die Förderwalzen 7, 8 des Paares 6 sowie die Teig-Auslassdüse 23 sind innerhalb der beziehungsweise an der Vorrichtung 1 so montiert, dass ein schneller Austausch der jeweiligen Komponente gewährleistet ist, also ein schneller Austausch zwischen Förderwalzen und/oder ein schneller Austausch zwischen Teig-Auslassdüsen. Getauscht werden kann zum Ersatz der jeweiligen Komponente nach Ende der Lebensdauer oder auch zur Vorgabe verschiedener Förderweg-Geometrien.

Bestandteil der jeweiligen Vorrichtung 1 kann beispielsweise ein Set aus verschiedenen Paaren 6 von Teig-Förderwalzen nach Art der Förderwalzen 7, 8 sein, die sich in mindestens einem der folgenden Parameter unterscheiden:
- Durchmesser der Förderwalzen;
- Axialerstreckung B der Förderrippen 17ᵢ beziehungsweise 18ᵢ;
- Axialerstreckung C der Fördernuten 19ᵢ, 20ᵢ;
- Rippenhöhe D der Förderrippen 17ᵢ beziehungsweise 18ᵢ;
- Nutentiefe E der Fördernuten 19ᵢ, 20ᵢ;
- weitere Strukturierung der Förderwalzen 7, 8;
- Material der Förderwalzen 7, 8.

Zum Erreichen hoher Adhäsionskräfte zwischen Walzen und zu fördernden Medien können unterschiedliche Werkstoffe eingesetzt werden. Hierdurch wird ein Fördern von Teigmasse, Fleischmasse oder alternativen zähfließenden Massen möglich. Die Werkstoffauswahl kann sich über alle lebensmittelzugelassenen Werkstoffe erstrecken. Hierbei sind Metalle, Kunststoffe oder Verbundwerkstoffe prädestiniert. Zudem kann die Oberflächenbeschaffenheit der Walzen, je nach Adhäsionsgrad des zu fördernden Gutes, deren Schleppverhalten verbessern oder verschlechtern. Ähnliche Effekte können durch Walzenbeschichtungen erreicht werden.

Teil dieses Komponenten-Sets können auch konventionelle Teig-Förderwalzen mit Mantelwänden ohne Rippenprofilierung sein.

Durch Auswahl der jeweiligen Komponenten-Konfiguration aus Förderwalzen 7, 8 sowie Teig-Auslassdüse 23 aus den jeweiligen Set-Komponenten kann eine Anpassung der Vorrichtung 1 an eine Zusammensetzung beziehungsweise einen Reifegrad der Teigmasse 5 erfolgen. Flüssigere Teige können beispielsweise mit Förderwalzen größeren Durchmessers, also mit kleinerem Abstand A, verarbeitet werden. Eine zusätzliche Strukturierung beziehungsweise eine Förderrippen-Konfiguration der Walzen-Mantelwände 11, 12 kann bei der Auswahl so gewählt werden, dass ein möglichst schlupffreier Betrieb der Förderwalzen beim jeweils zu verarbeitenden Teig der Teigmasse 5 gegeben ist.

Die Vorrichtung 1 hat weiterhin eine Volumen-Messeinrichtung 28 zur Vermessung eines Volumens des Teigbandes 2 im Förderweg 16 nach der Teig-Auslassdüse 23. Als die Volumen-Messeinrichtung 28 kann eine Ausführung einer Messeinrichtung zum Einsatz kommen, die beschrieben ist in der EP 2 305 039 B1. Bei der Volumen-Messeinrichtung 28 handelt es sich um eine optische Volumen-Messeinrichtung, aufweisend eine Laserlichtquelle und mindestens eine, beispielsweise zwei Detektoreinheiten. Ein optischer Erfassungsbereich 28a der Volumen-Messeinrichtung 28 ist beispielsweise in der Figur 1 angedeutet. Hinsichtlich der Einzelheiten der Volumen-Messeinrichtung 28 wird auf die EP 2 305 039 B1 verwiesen. Mit Hilfe der Volumen-Messeinrichtung 28 ist insbesondere eine Teigdichte-Messung des Teigbandes möglich.

Je nach Ausführung der Vorrichtung 1 kann diese zudem eine Waage 29 zum Wiegen des Teigbandes 2 im Förderweg 16 nach der Teig-Auslassdüse 23 aufweisen.

Die Vorrichtung 1 hat weiterhin eine zentrale Steuereinrichtung 30, die in der Fig. 1 schematisch wiedergegeben ist. Über nicht dargestellte Signalverbindungen steht die Steuereinrichtung 30 mit dem Förderantrieb 7a, dem Abstands-Einstellantrieb 22, dem Verschlussantrieb 27, der Volumenmessvorrichtung 28 und der Waage 29 in Signalverbindung.

Mit der Steuereinrichtung 30 kann ein gesteuerter und/oder geregelter Portionierprozess mit der Vorrichtung 1 durchgeführt werden. Die Steuereinrichtung 30 kann künstliche Intelligenz (KI) beinhalten.

Die Vorrichtung 1 kann insgesamt als eine CIP (Clean in Place)-Ausführung gestaltet sein, sodass alle teigberührenden Komponenten der Vorrichtung 1 durch entsprechende Reinigungs-Zugänglichkeit strengen CIP-Anforderungen genügen. Eine entsprechende Zugänglichkeit der Komponenten wird bei der Vorrichtung 1 insbesondere über eine werkzeugfreie Montage/Demontagemöglichkeit der Förderwalzen 7, 8 und der Auslassdüse 23 sowie über eine einfache Zugänglichkeit der Innenräume des Teigbehälters 4, des Walzengehäuses 15 gewährleistet.

Anhand insbesondere der Fig. 1, 3, 4 und 5 wird nachfolgend ein Teigband-Portionierprozess erläutert, der mittels der Vorrichtung 1 durchgeführt werden kann.

Fig. 1 zeigt die Situation, bei der in den Teigbehälter 4 eingefüllte Teigmasse 5 über eine Förderung durch das Paar 6 der Förderwalzen 7, 8 soweit fortgeschritten ist, dass die Teig-Auslassdüse 23 bis hin zur Verschlusseinrichtung 26 in der Verschlussstellung vollständig gefüllt ist.

Fig. 3 zeigt die Situation nach einer Umstellung der Verschlusseinrichtung 26 von der Verschlussstellung in die Freigabestellung mit Hilfe des Verschlussantriebs 27. Aus der Teig-Auslassdüse 23 tritt dann definiert das Teigband 2 aus und wird über ein Endlos-Förderband 31, das eine Abgabe-Fördereinrichtung darstellt, längs des Förderwegs 16 weitertransportiert. Die Fördereinrichtung 31 wird über einen weiteren Förderantrieb 32 angetrieben. Diese steht ebenfalls mit der zentralen Steuereinrichtung 30 in Signalverbindung.

Das aus der Teig-Auslassdüse 23 austretende Teigband 2 wird sensorisch über die Volumen-Messeinrichtung 28 überwacht.

Die Volumen-Messeinrichtung 28 erfasst insbesondere Schwankungen eines Volumenkörpers des Teigbandes 2 und integriert ein durch den Erfassungsbereich 28a tretendes Volumen des Teigbandes 2 auf.

Zusätzlich kann eine weitere Messeinheit 28b (vgl. Fig. 1) vorgesehen sein, die insbesondere optisch erfassen kann, ob ausgehend von der Verschlusseinrichtung 26 das Teigband auf dem Endlos-Förderband 31 transportiert wird oder nicht.

Fig. 4 zeigt eine Momentanposition bei fortschreitendem Auslass des Teigbandes 2 durch die Teig-Auslassdüse 23. Entweder extern gesteuert oder aufgrund eines Ausgabesignals der Volumen-Messeinrichtung 28 und/oder der Waage 29 wird zur Vorgabe einer Teigportion in Form eines Abschnittes des Teigbands 2 die Verschlusseinrichtung 26 von der Freigabestellung nach Fig. 3 wieder in die Verschlussstellung überführt, sodass eine Teigportion 3 mit Hilfe der Verschlusseinrichtung 26 vom Endlos-Teigband 2 abgedrückt wird.

Eine Steuerung der Verschlusseinrichtung kann abhängig von einem Gärzustand der Teigmasse, insbesondere abhängig von einem Gärzustand von einzelnen Portionen, insbesondere Knetportionen der Teigmasse 5 erfolgen. Diese Informationen können entweder aufgrund der Vorgeschichte der Teigmasse 5 über eine Dateneingabe vorliegen oder auch anhand der Sensordaten der Volumen-Messeinrichtung 28 und/oder Waage 29 vorliegen. Derartige Daten können über die KI der Steuereinrichtung 30 in einem lernenden Prozess (Machine Learning ML) angepasst und optimiert werden, sodass eine genaue Teig-Portionierung das Resultat ist.

Teil dieses Komponenten-Sets können auch konventionelle Teig-Förderwalzen mit Mantelwänden ohne Rippenprofilierung sein.

Fig. 5 zeigt die Situation, bei der die Teigband-Portion 3 mit Hilfe der Fördereinrichtung 31 bei geschlossener Verschlusseinrichtung 26 weiter längs des Förderweges 16 abgefördert wurde, sodass ein entsprechender Abstand F zwischen dem düsenseitigen Ende der Teigband-Portion 3 und der Verschlusseinrichtung 23 resultiert. Ausgehend von der Momentansituation nach Fig. 5 kann dann die Verschlusseinrichtung 23 wieder in die Freigabestellung umgestellt werden, sodass dann die nächste Teigportion produziert werden kann. Der Abstand F erleichtert eine Weiterverarbeitung der verschiedenen Teigband-Portionen 3.

## Patentansprüche

1. Vorrichtung (1) zur Erzeugung eines kontinuierlichen Teigbandes (2) und von Teigportionen (3) in Form von Abschnitten des Teigbandes (2),
- mit einem Teigbehälter (4) zur Aufnahme einer Teigmasse (5),
- mit mindestens einem Paar von beabstandeten, gegenläufig orientierten Teig-Förderwalzen (7, 8), angeordnet in einem Walzengehäuse (15), welches in einem Förderweg (16) der Teigmasse (5) dem Teigbehälter (4) nachgeordnet ist,
- wobei jede der Förderwalzen (7, 8) des Förderwalzen-Paars (6) eine Walzen-Mantelwand (11, 12) mit einer Mehrzahl von um eine Walzen-Rotationsachsen umlaufenden, axial voneinander durch Fördernuten (19ᵢ, 20ᵢ) beabstandeten Förderrippen (17ᵢ, 18ᵢ) aufweist,
- mit einer Teig-Auslassdüse (23), die im Förderweg (16) der Teigmasse (5) in Form eines Teigstrangs (24) dem Walzengehäuse (15) nachgeordnet ist.

2. Vorrichtung nach Anspruch 1, **dadurch gekennzeichnet, dass** die Förderwalzen (7, 8) des Förderwalzen-Paars gleiche Rotations-Axialabstände zwischen benachbarten Förderrippen (17ᵢ, 17ᵢ₊₁; 18ᵢ, 18ᵢ₊₁) aufweisen.

3. Vorrichtung nach Anspruch 1 oder 2, **dadurch gekennzeichnet, dass** die Walzen-Mantelwände (11, 12) der Förderwalzen (7, 8) des Förderwalzen-Paars (6) so zueinander ausgerichtet sind, dass eine Förderrippe (17ᵢ, 18ᵢ) der einen Förderwalze (7, 8) des Förderwalzen-Paars axial auf Höhe einer Fördernut (20ᵢ, 19ᵢ) der anderen Förderwalze (8, 7) des Förderwalzen-Paars liegt.

4. Vorrichtung nach einem der Ansprüche 1 bis 3, **dadurch gekennzeichnet, dass** die Förderrippen (17ᵢ, 18ᵢ) ein stetiges, kantenfreies Rippenprofil (21) aufweisen und/oder, dass die Fördernuten (19ᵢ, 20ᵢ) ein stetiges, kantenfreies Rippenprofil (21) aufweisen.

5. Vorrichtung nach einem der Ansprüche 1 bis 4, **dadurch gekennzeichnet, dass** die Förderrippen (17i, 18;) und die Fördernuten (19ᵢ, 20ᵢ) der jeweiligen Förderwalze (7, 8) stetig und kantenfrei ineinander übergehen.

6. Vorrichtung nach einem der Ansprüche 1 bis 5, **dadurch gekennzeichnet, dass** die Walzen-Mantelwand (11, 12) der jeweiligen Förderwalze (7, 8) des Förderwalzen-Paars eine Strukturierung aufweist.

7. Vorrichtung nach einem der Ansprüche 1 bis 6, **gekennzeichnet durch** eine Verschlusseinrichtung (26) im Bereich eines Auslassabschnitts (25) der Teig-Auslassdüse (23), die umstellbar ist zwischen
- einer Freigabestellung, in der die Verschlusseinrichtung (26) den Auslassabschnitt (25) zum Durchtritt des Teigbandes (2) freigibt,
und
- einer Verschlussstellung, in der die Verschlusseinrichtung (26) den Auslassabschnitt (25) verschließt.

8. Vorrichtung nach einem der Ansprüche 1 bis 7, **dadurch gekennzeichnet, dass** die Förderwalzen, (7, 8) des Förderwalzen-Paares und/oder die Teig-Auslassdüse (23) so montiert sind, dass ein schneller Austausch der jeweiligen Komponente gewährleistet ist.

9. Vorrichtung nach Anspruch 8, **dadurch gekennzeichnet, dass** die Förderwalzen (7, 8) und/oder die Teig-Auslassdüse (23) Teil eines Sets aus Komponenten unterschiedlicher Komponentenausführung dient.

10. Vorrichtung nach einem der Ansprüche 1 bis 9, **gekennzeichnet durch** eine Volumen-Messeinrichtung (28) zur Vermessung eines Volumens des Teigbandes (2) im Förderweg (16) nach der Teig-Auslassdüse (23).

11. Vorrichtung nach einem der Ansprüche 1 bis 10, **gekennzeichnet durch** eine Waage (29) zum Wiegen des Teigbandes (2) im Förderweg (16) nach der Teig-Auslassdüse (23).

12. Vorrichtung nach einem der Ansprüche 1 bis 11, **gekennzeichnet durch** eine Steuereinrichtung (30), die in Signalverbindung mit der Verschlusseinrichtung (26) steht.

13. Vorrichtung nach Anspruch 12 unter Rückbeziehung auf die Ansprüche 10 oder 11, **dadurch gekennzeichnet, dass** die Steuereinrichtung (30) in Signalverbindung mit der Volumen-Messeinrichtung (28) und/oder mit der Waage (29) steht.

14. Vorrichtung nach einem der Ansprüche 1 bis 13, **gekennzeichnet durch** eine CIP (Clean in Place)-Ausführung.
